# EUROPÄISCHE PATENTSCHRIFT

(11) **EP 2 503 126 B1**
(45) Veröffentlichungstag und Bekanntmachung des Hinweises auf die Patenterteilung: **27.08.2014**
(21) Anmeldenummer: 11159784.5
(22) Anmeldetag: 25.03.2011
(51) Int. Cl.: F02B 37/007, F02B 37/02, F02B 37/18, F01L 13/00, F02D 13/02, F02F 1/24, F01N 13/10

(54) **Mit Waste-Gate-Turbinen ausgestattete Brennkraftmaschine und Verfahren zum Betreiben einer derartigen Brennkraftmaschine**
Internal combustion engine equipped with waste gate turbines and method to operate such an engine
Moteur à combustion interne équipé de deux turbines à décharge et procédé de fonctionnement d'un tel moteur à combustion interne

(43) Veröffentlichungstag der Anmeldung: 26.09.2012
(73) Patentinhaber: Ford Global Technologies, LLC, Dearborn, MI 48126 (US)
(72) Erfinder: Bartsch, Guenther, 51645 Gummersbach (DE); Friedfeldt, Rainer, 50354 Hürth (DE); Kuhlbach, Kai, 51427 Bergisch Gladbach (DE); Schorn, Norbert, 52080 Aachen (DE)
(74) Vertreter: Drömer, Hans-Carsten

(56) Entgegenhaltungen:
- EP-A1- 1 645 735
- EP-A1- 2 246 543
- DE-A1-102005 054 249
- JP-A- 62 174 537

## Beschreibung

Die Erfindung betrifft eine aufgeladene Brennkraftmaschine mit mindestens zwei Abgasturboladern und mindestens einem Zylinderkopf mit mindestens zwei Zylindern, wobei jeder Zylinder mindestens zwei Auslaßöffnungen zum Abführen der Abgase aufweist, von denen mindestens eine als zuschaltbare Auslaßöffnung ausgebildet ist, und sich an jede Auslaßöffnung eine Abgasleitung anschließt, bei der
- die Abgasleitungen der zuschaltbaren Auslaßöffnungen von mindestens zwei Zylindern unter Ausbildung eines ersten Abgaskrümmers zu einer ersten Gesamtabgasleitung zusammenführen, welche mit der Turbine eines ersten Abgasturboladers verbunden ist, und
- die Abgasleitungen der anderen Auslaßöffnungen der mindestens zwei Zylinder unter Ausbildung eines zweiten Abgaskrümmers zu einer zweiten Gesamtabgasleitung zusammenführen, welche mit der Turbine eines zweiten Abgasturboladers verbunden ist,
- die erste Turbine mit einer ersten Bypaßleitung ausgestattet ist, die stromaufwärts der ersten Turbine aus dem ersten Abgaskrümmer abzweigt,
- die zweite Turbine mit einer zweiten Bypaßleitung ausgestattet ist, die stromaufwärts der zweiten Turbine aus dem zweiten Abgaskrümmer abzweigt, und
- die erste Bypaßleitung und die zweite Bypaßleitung unter Ausbildung eines Knotenpunktes zu einer gemeinsamen Bypaßleitung zusammenführen.

Des Weiteren betrifft die Erfindung ein Verfahren zum Betreiben einer derartigen Brennkraftmaschine.

Eine Brennkraftmaschine der eingangs genannten Art beschreibt die europäische Patentanmeldung EP 1 645 735 A1.

Im Rahmen der vorliegenden Erfindung umfaßt der Begriff Brennkraftmaschine insbesondere Ottomotoren, aber auch Dieselmotoren und Hybrid-Brennkraftmaschinen. Brennkraftmaschinen verfügen über einen Zylinderblock und mindestens einen Zylinderkopf, die zur Ausbildung der Zylinder miteinander verbunden werden. Um den Ladungswechsel zu steuern, benötigt eine Brennkraftmaschine Steuerorgane - in der Regel in Gestalt von Ventilen - und Betätigungseinrichtungen zur Betätigung dieser Steuerorgane. Der für die Bewegung der Ventile erforderliche Ventilbetätigungsmechanismus einschließlich der Ventile selbst wird als Ventiltrieb bezeichnet. Häufig dient der Zylinderkopf zur Aufnahme des Ventiltriebs.

Im Rahmen des Ladungswechsels erfolgt das Ausschieben der Verbrennungsgase über die Auslaßöffnungen der Zylinder und das Füllen der Brennräume, d. h. das Ansaugen des Frischgemisches bzw. der Frischluft über die Einlaßöffnungen. Es ist die Aufgabe des Ventiltriebes die Einlaß- und Auslaßöffnungen rechtzeitig freizugeben bzw. zu schließen, wobei eine schnelle Freigabe möglichst großer Strömungsquerschnitte angestrebt wird, um die Drosselverluste in den ein- bzw. ausströmenden Gasströmungen gering zu halten und eine möglichst gute Füllung des Brennraumes mit Frischgemisch bzw. ein effektives, d. h. vollständiges Abführen der Abgase zu gewährleisten. Nach dem Stand der Technik werden die Zylinder daher auch häufig mit zwei oder mehr Einlaß- bzw. Auslaßöffnungen ausgestattet. Auch die mindestens zwei Zylinder der Brennkraftmaschine, die Gegenstand der vorliegenden Erfindung ist, sind mit mindestens zwei Auslaßöffnungen ausgestattet.

Die Einlaßkanäle, die zu den Einlaßöffnungen führen, und die Auslaßkanäle, d. h. Abgasleitungen, die sich an die Auslaßöffnungen anschließen, sind nach dem Stand der Technik zumindest teilweise im Zylinderkopf integriert. Die Abgasleitungen der Zylinder werden in der Regel zu einer gemeinsamen Gesamtabgasleitung oder aber - wie bei der erfindungsgemäßen Brennkraftmaschine - gruppenweise zu zwei oder mehreren Gesamtabgasleitungen zusammengeführt. Die Zusammenführung von Abgasleitungen zu einer Gesamtabgasleitung wird im Allgemeinen und im Rahmen der vorliegenden Erfindung als Abgaskrümmer bezeichnet, wobei das Teilstück der Gesamtabgasleitung, welches stromaufwärts einer in der Gesamtabgasleitung angeordneten Turbine liegt, erfindungsgemäß als zum Abgaskrümmer gehörend angesehen wird.

Stromabwärts der Krümmer werden die Abgase vorliegend zwecks Aufladung der Brennkraftmaschine den Turbinen von mindestens zwei Abgasturboladern zugeführt und gegebenenfalls einem oder mehreren Systemen zur Abgasnachbehandlung.

Die Vorteile eines Abgasturboladers beispielsweise im Vergleich zu einem mechanischen Lader bestehen darin, dass keine mechanische Verbindung zur Leistungsübertragung zwischen Lader und Brennkraftmaschine besteht bzw. erforderlich ist. Während ein mechanischer Lader die für seinen Antrieb benötigte Energie vollständig von der Brennkraftmaschine bezieht und somit die bereitgestellte Leistung mindert und auf diese Weise den Wirkungsgrad nachteilig beeinflußt, nutzt der Abgasturbolader die Abgasenergie der heißen Abgase.

Ein Abgasturbolader umfaßt einen Verdichter und eine Turbine, die auf derselben Welle angeordnet sind, wobei der heiße Abgasstrom der Turbine zugeführt wird und sich unter Energieabgabe in dieser Turbine entspannt, wodurch die Welle in Drehung versetzt wird. Aufgrund der hohen Drehzahl wird die Welle bevorzugt von Gleitlagern aufgenommen. Die vom Abgasstrom an die Turbine und schließlich an die Welle abgegebene Energie wird für den Antrieb des ebenfalls auf der Welle angeordneten Verdichters genutzt. Der Verdichter fördert und komprimiert die ihm zugeführte Ladeluft, wodurch eine Aufladung der Zylinder erreicht wird. Gegebenenfalls ist eine Ladeluftkühlung vorgesehen, mit der die komprimierte Verbrennungsluft vor Eintritt in die Zylinder gekühlt wird.

Die Aufladung dient in erster Linie der Leistungssteigerung der Brennkraftmaschine. Die für den Verbrennungsprozeß benötigte Luft wird dabei verdichtet, wodurch jedem Zylinder pro Arbeitsspiel eine größere Luftmasse zugeführt werden kann. Dadurch können die Kraftstoffmasse und damit der Mitteldruck gesteigert werden. Die Aufladung ist ein geeignetes Mittel, bei unverändertem Hubraum die Leistung einer Brennkraftmaschine zu steigern, oder bei gleicher Leistung den Hubraum zu reduzieren. In jedem Fall führt die Aufladung zu einer Erhöhung der Bauraumleistung und einer günstigeren Leistungsmasse. Bei gleichen Fahrzeugrandbedingungen läßt sich so das Lastkollektiv zu höheren Lasten hin verschieben, wo der spezifische Kraftstoffverbrauch niedriger ist.

Die Auslegung der Abgasturboladung bereitet häufig Schwierigkeiten, wobei grundsätzlich eine spürbare Leistungssteigerung in allen Drehzahlbereichen angestrebt wird. Nach dem Stand der Technik wird aber ein starker Drehmomentabfall bei Unterschreiten einer bestimmten Drehzahl beobachtet. Verständlich wird dieser Drehmomentabfall, wenn berücksichtigt wird, dass das Ladedruckverhältnis vom Turbinendruckverhältnis abhängt. Wird beispielsweise bei einem Dieselmotor die Motorendrehzahl verringert, führt dies zu einem kleineren Abgasmassenstrom und damit zu einem kleineren Turbinendruckverhältnis. Dies hat zur Folge, dass zu niedrigeren Drehzahlen hin das Ladedruckverhältnis ebenfalls abnimmt, was gleichbedeutend ist mit einem Drehmomentabfall.

Grundsätzlich könnte dem Abfall des Ladedruckes durch eine Verkleinerung des Turbinenquerschnittes und der damit einhergehenden Steigerung des Turbinendruckverhältnisses entgegengewirkt werden. Damit wird der Drehmomentabfall aber nur weiter zu niedrigeren Drehzahlen hin verschoben. Zudem sind dieser Vorgehensweise, d. h. der Verkleinerung des Turbinenquerschnittes, Grenzen gesetzt, da die gewünschte Aufladung und Leistungssteigerung auch bei hohen Drehzahlen, d. h. großen Abgasmengen, uneingeschränkt möglich sein soll.

Die Drehmomentcharakteristik einer aufgeladenen Brennkraftmaschine wird nach dem Stand der Technik durch unterschiedliche Maßnahmen zu verbessern versucht.

Beispielsweise durch eine kleine Auslegung des Turbinenquerschnittes und gleichzeitiger Abgasabblasung. Eine derartige Turbine wird auch als Waste-Gate-Turbine bezeichnet. Überschreitet der Abgasmassenstrom eine kritische Größe wird durch Öffnen eines Absperrelementes ein Teil des Abgasstromes im Rahmen der sogenannten Abgasabblasung mittels einer Bypaßleitung an der Turbine bzw. dem Turbinenlaufrad vorbei geführt. Diese Vorgehensweise hat den Nachteil, dass das Aufladeverhalten bei höheren Drehzahlen bzw. größeren Abgasmengen unzureichend ist.

Die Drehmomentcharakteristik einer aufgeladenen Brennkraftmaschine kann des Weiteren durch mehrere parallel angeordnete Turbolader, d. h. durch mehrere parallel angeordnete Turbinen von kleinem Turbinenquerschnitt verbessert werden, wobei mit steigender Abgasmenge Turbinen zugeschaltet werden.

Eine aufgeladene Brennkraftmaschine mit mindestens zwei parallel angeordneten Abgasturboladern ist auch Gegenstand der vorliegenden Erfindung, wobei eine Turbine als zuschaltbare Turbine ausgebildet ist, welche nur bei größeren Abgasmengen mit Abgas beaufschlagt, d. h. aktiviert wird.

Dabei ist man bemüht, die Turbinen möglichst nahe am Auslaß, d. h. den Auslaßöffnungen der Zylinder, anzuordnen, um auf diese Weise zum einen die Abgasenthalpie der heißen Abgase, die maßgeblich vom Abgasdruck und der Abgastemperatur bestimmt wird, optimal nutzen zu können und zum anderen ein schnelles Ansprechverhalten der Turbolader zu gewährleisten. In diesem Zusammenhang wird daher grundsätzlich angestrebt, die thermische Trägheit und das Volumen des Leitungssystems zwischen den Auslaßöffnungen an den Zylindern und den Turbinen zu minimieren, was durch Reduzierung der Masse und der Länge der Abgasleitungen erreicht werden kann.

Um die zuvor genannten Ziele zu erreichen, werden die Abgasleitungen von mindestens zwei Zylindern gruppenweise in der Art zusammen geführt, dass von jedem dieser Zylinder mindestens eine Abgasleitung zu der Turbine des ersten Abgasturboladers und mindestens eine Abgasleitung zu der Turbine des zweiten Abgasturboladers führt.

Erfindungsgemäß ist die Turbine des ersten Abgasturboladers, d. h. die erste Turbine, als zuschaltbare Turbine ausgebildet und die Auslaßöffnungen der zu dieser Turbine führenden Abgasleitungen sind - dazu korrespondierend - als zuschaltbare Auslaßöffnungen ausgeführt. Nur bei größeren Abgasmengen werden die zuschaltbaren Auslaßöffnungen im Rahmen des Ladungswechsels geöffnet und dadurch die erste Turbine aktiviert, d. h. mit Abgas beaufschlagt.

Im Vergleich zu Ausführungsformen, bei denen stromaufwärts der beiden Turbinen ein einziges zusammenhängendes Leitungssystem vorgesehen ist, verbessert sich durch die vorstehend beschriebene Gruppierung, d. h. die Verwendung zweier voneinander getrennter Abgaskrümmer, das Betriebsverhalten der Brennkraftmaschine, insbesondere bei kleinen Abgasströmen, unter anderem auch, weil das Leitungsvolumen stromaufwärts der kontinuierlich von Abgas durchströmten zweiten Turbine durch diese Maßnahme verkleinert wird, was bei niedrigen Lasten bzw. Drehzahlen, d. h. geringen Abgasmengen, vorteilhaft ist, insbesondere das Ansprechverhalten verbessert.

Bei der erfindungsgemäßen Brennkraftmaschine sind beide Turbinen als Waste-Gate-Turbinen ausgebildet. Hierzu ist die erste Turbine mit einer ersten Bypaßleitung, die stromaufwärts der ersten Turbine aus dem ersten Abgaskrümmer abzweigt, ausgestattet und die zweite Turbine mit einer zweiten Bypaßleitung, die stromaufwärts der zweiten Turbine aus dem zweiten Abgaskrümmer abzweigt.

Nach dem Stand der Technik ist zur Abblasung von Abgas via Bypaßleitung in jeder Bypaßleitung der beiden Turbinen ein Absperrelement vorzusehen. Die Absperrelemente sind infolge der Beaufschlagung mit heißem Abgas thermisch hoch belastet, so dass geeignete Werkstoffe für deren Herstellung erforderlich sind. Dieser Umstand macht die Absperrelemente zu kostenintensiven Bauteilen.

In Zusammenhang mit dem Absperrelement einer Waste-Gate-Turbine muß zudem berücksichtigt werden, dass die Steuerung des Absperrelementes vergleichsweise aufwendig ist und bei Verwendung einer Druckdose für eine Ladedruck- bzw. Abgasdrucksteuerung ein entsprechender Raumbedarf besteht für die Druckdose und die dazugehörige Mechanik. Insbesondere Letzteres steht einer kompakten Bauweise bzw. einem dichten Packaging entgegen.

Vor dem Hintergrund des oben Gesagten ist es eine Aufgabe der vorliegenden Erfindung, eine aufgeladene Brennkraftmaschine gemäß dem Oberbegriff des Anspruchs 1 bereitzustellen, mit der die aus dem Stand der Technik bekannten Probleme bzw. Nachteile überwunden werden und die insbesondere eine geringere Anzahl an thermisch hochbelasteten Absperrelementen aufweist bzw. benötigt.

Eine weitere Teilaufgabe der vorliegenden Erfindung ist es, ein Verfahren zum Betreiben einer derartigen Brennkraftmaschine aufzuzeigen.

Gelöst wird die erste Teilaufgabe durch eine aufgeladene Brennkraftmaschine mit mindestens zwei Abgasturboladern und mindestens einem Zylinderkopf mit mindestens zwei Zylindern, wobei jeder Zylinder mindestens zwei Auslaßöffnungen zum Abführen der Abgase aufweist, von denen mindestens eine als zuschaltbare Auslaßöffnung ausgebildet ist, und sich an jede Auslaßöffnung eine Abgasleitung anschließt, bei der
- die Abgasleitungen der zuschaltbaren Auslaßöffnungen von mindestens zwei Zylindern unter Ausbildung eines ersten Abgaskrümmers zu einer ersten Gesamtabgasleitung zusammenführen, welche mit der Turbine eines ersten Abgasturboladers verbunden ist,
- die Abgasleitungen der anderen Auslaßöffnungen der mindestens zwei Zylinder unter Ausbildung eines zweiten Abgaskrümmers zu einer zweiten Gesamtabgasleitung zusammenführen, welche mit der Turbine eines zweiten Abgasturboladers verbunden ist,
- die erste Turbine mit einer ersten Bypaßleitung ausgestattet ist, die stromaufwärts der ersten Turbine aus dem ersten Abgaskrümmer abzweigt, und
- die zweite Turbine mit einer zweiten Bypaßleitung ausgestattet ist, die stromaufwärts der zweiten Turbine aus dem zweiten Abgaskrümmer abzweigt, und
- die erste Bypaßleitung und die zweite Bypaßleitung unter Ausbildung eines Knotenpunktes zu einer gemeinsamen Bypaßleitung zusammenführen,
   und die dadurch gekennzeichnet ist, dass am Knotenpunkt ein Absperrelement vorgesehen ist, welches zwischen einer Offenstellung und einer Schließstellung verstellbar ist, wobei
- das Absperrelement die beiden Bypaßleitungen in der Schließstellung von der gemeinsamen Bypaßleitung trennt und in der Offenstellung mit der gemeinsamen Bypaßleitung verbindet,
- in der Schließstellung des Absperrelementes mindestens ein Überströmkanal verbleibt, der die beiden Bypaßleitungen miteinander verbindet,
- das Absperrelement den mindestens einen Überströmkanal beim Überführen in die Schließstellung mit ausbildet, und
- der mindestens eine Überströmkanal eine Drosselstelle darstellt, die eine Druckabsenkung in der durch den Kanal hindurchtretenden Abgasströmung bewirkt.

Im Gegensatz zum Stand der Technik ist bei der erfindungsgemäßen Brennkraftmaschine nur ein einzelnes Absperrelement erforderlich, um die Abgasabblasung an beiden Turbinen zu steuern. Hierzu werden die beiden Bypaßleitung der Turbinen unter Ausbildung eines Knotenpunktes zu einer gemeinsamen Bypaßleitung zusammengeführt, wobei das Absperrelement zur Abgasabblasung am Knotenpunkt angeordnet wird. Diese Maßnahme ermöglicht ein Öffnen und Schließen beider Bypaßleitungen mit nur einem Absperrelement.

In der Schließstellung des Absperrelementes verbleibt mindestens ein Überströmkanal, der die beiden Bypaßleitungen miteinander verbindet. Der Überströmkanal führt gleich in mehrerer Hinsicht zu einem verbesserten Betriebsverhalten der zuschaltbaren Turbine.

Der Überströmkanal läßt auch bei geringen Abgasmengen, wenn die zuschaltbare Turbine regelmäßig deaktiviert ist, einen Teil des Abgases vom zweiten Abgaskrümmer in den ersten Abgaskrümmer überströmen, so dass die zuschaltbare Turbine via zweitem Abgaskrümmer und Überströmkanal auch im deaktivierten, d. h. abgeschalteten Zustand mit Abgas beaufschlagt wird.

Dabei soll der zuschaltbaren Turbine via Überströmkanal lediglich so viel Abgas zugeführt werden, dass die Turbinenwelle eine Mindestdrehzahl *n_{T}* nicht unterschreitet. Das Aufrechthalten einer gewissen Mindestdrehzahl verhindert bzw. vermindert den Abbau des hydrodynamischen Schmierfilms in der Gleitlagerung der Welle des ersten Laders. Die Maßnahme, der zuschaltbaren Turbine auch im deaktivierten Zustand eine geringe Abgasmenge zu zuführen, wirkt sich vorteilhaft auf den Verschleiß und die Dauerhaltbarkeit des ersten Abgasturboladers aus. Zudem verbessert sich das Ansprechverhalten der zuschaltbaren Turbine bzw. der Aufladung insgesamt, denn die zuschaltbare Turbine wird bei Aktivierung ausgehend von einer höheren Drehzahl beschleunigt. Einem vom Fahrer angeforderten Drehmoment kann vergleichsweise schnell, d. h. mit nur geringer Verzögerung entsprochen werden.

Der mindestens eine Überströmkanal soll lediglich eine geringe Abgasmenge zur Verfügung stellen, genug Abgas, um eine Mindestdrehzahl *n_{T}* der Welle zu gewährleisten, und ist geometrisch entsprechend zu dimensionieren. Es ist nicht die Aufgabe der zuschaltbaren Turbine im deaktivierten Zustand am Aufbau des Ladedrucks mitzuwirken. Die hierzu erforderliche Abgasmenge bereitzustellen, ist nicht die Aufgabe des Überströmkanals, sondern vielmehr - bei geöffneten bzw. zugeschalteten Auslaßöffnungen - die des ersten Abgaskrümmers.

Dem Überströmkanal kommt prinzipbedingt dann Bedeutung zu, wenn die zuschaltbare Turbine deaktiviert ist, d. h. bei geringen Abgasmengen, wenn in der Regel auch das am Knotenpunkt angeordnete Absperrelement deaktiviert, d. h. geschlossen ist.

Erfindungsgemäß bildet das Absperrelement den mindestens einen Überströmkanal beim Überführen in die Schließstellung mit aus.

Würde kein Überströmkanal vorgesehen, erwiese es sich als Nachteil, dass die vorstehend beschriebene Brennkraftmaschine mit zwei separaten, voneinander getrennten Abgaskrümmern und zuschaltbaren Auslaßöffnungen ausgestattet ist. Die zuschaltbare Turbine wäre dann im deaktivierten Zustand von der Abgasströmung vollständig abgeschnitten, d. h. der abgeschalteten Turbine würde keinerlei Abgas zugeführt. Dies resultiert aus der Verwendung eines separaten Abgaskrümmers und dem Nichtöffnen der zuschaltbaren Auslaßöffnungen in diesem Betriebszustand.

Infolge der fehlenden Abgasanströmung würde sich die Drehzahl der zuschaltbaren Turbine bei Deaktivierung deutlich vermindern. Der hydrodynamische Schmierfilm in der Wellenlagerung würde sich abbauen oder zusammen brechen. Das Ansprechverhalten der zuschaltbaren Turbine bei Aktivierung würde sich verschlechtern.

Mit Hinblick auf die Funktion des mindestens einen Überströmkanals ist es vorteilhaft, dass der mindestens eine Überströmkanal eine Drosselstelle darstellt, die zu einer Druckabsenkung in der durch den Kanal hindurchtretenden Abgasströmung führt.

Auf diese Weise wird sichergestellt, dass nur eine geringe Abgasmenge den Kanal bzw. die Kanäle passiert, nämlich gerade so viel Abgas, wie es erforderlich ist, um eine gewisse Mindestdrehzahl der Turbinenwelle aufrecht zu erhalten.

Der mindestens eine Kanal ist entsprechend seiner Funktion zu dimensionieren, d. h. kleiner auszuführen als beispielsweise die sich an eine Auslaßöffnung anschließende Abgasleitung, welche der möglichst verlustfreien Versorgung der Turbine mit ausreichend Abgas dient.

Damit wird die erste der Erfindung zugrunde liegende Aufgabe gelöst, nämlich eine aufgeladene Brennkraftmaschine bereitzustellen, die eine geringere Anzahl an thermisch hochbelasteten Absperrelementen aufweist.

Eine erfindungsgemäße Brennkraftmaschine kann auch zwei Zylinderköpfe aufweisen, beispielweise, wenn die Zylinder auf zwei Zylinderbänke verteilt angeordnet sind.

Aus den vorstehend genannten Gründen sind Ausführungsformen der Brennkraftmaschine vorteilhaft, bei denen der erste Abgaskrümmer und der zweite Abgaskrümmer stromaufwärts der beiden Turbinen via mindestens einen nicht verschließbaren Verbindungskanal dauerhaft miteinander verbunden sind.

Der Überströmkanal und der Verbindungskanal erfüllen dieselbe Funktion, nämlich der zuschaltbaren Turbine im deaktivierten Zustand Abgas zu zuführen, um die Turbinenwelle oberhalb einer Mindestdrehzahl zu halten. Im Folgenden werden der Überströmkanal und der Verbindungskanal daher auch unter den Begriff Kanal subsumiert, d. h. verkürzt als Kanal bezeichnet.

Mit Hinblick auf die Funktion der beiden beschriebenen Kanalarten, sind Ausführungsformen der Brennkraftmaschine vorteilhaft, bei denen der mindestens eine Verbindungskanal eine Drosselstelle darstellt, die zu einer Druckabsenkung in der durch den Kanal hindurchtretenden Abgasströmung führt.

Auf diese Weise wird sichergestellt, dass nur eine geringe Abgasmenge den Kanal bzw. die Kanäle passiert, nämlich gerade so viel Abgas, wie es erforderlich ist, um eine gewisse Mindestdrehzahl der Turbinenwelle aufrecht zu erhalten.

Der mindestens eine Kanal ist entsprechend seiner Funktion zu dimensionieren, d. h. kleiner auszuführen als beispielsweise die sich an eine Auslaßöffnung anschließende Abgasleitung, welche der möglichst verlustfreien Versorgung der Turbine mit ausreichend Abgas dient.

Vorteilhaft sind daher Ausführungsformen der aufgeladenen Brennkraftmaschine, bei denen der kleinste Querschnitt A_{Quer,K} des mindestens einen Kanals kleiner ist als der kleinste Querschnitt A_{Quer,Ex} einer Abgasleitung.

Der Strömungsquerschnitt einer Leitung bzw. eines Kanals ist der Parameter, der maßgeblich Einfluß auf den Durchsatz hat, d. h. auf die pro Zeiteinheit durch den Kanal hindurchgeführte Abgasmenge. Zu Vergleichszwecken wird erfindungsgemäß Bezug genommen auf den Strömungsquerschnitt, welcher senkrecht zum mittleren Stromfaden steht.

Vorteilhaft sind Ausführungsformen der aufgeladenen Brennkraftmaschine, bei denen gilt: A_{Quer,K} ≤ 0.3 A_{Quer,Ex}.

Vorteilhaft sind insbesondere Ausführungsformen der aufgeladenen Brennkraftmaschine, bei denen gilt: A_{Quer,K} ≤ 0.2 A_{Quer,Ex}, vorzugsweise A_{Quer,K} ≤ 0.1 A_{Quer,Ex} bzw. A_{Quer,K} ≤ 0.05 A_{Quer,Ex}.

Bei Brennkraftmaschinen, bei denen ein Verbindungskanal vorgesehen ist, sind Ausführungsformen vorteilhaft, die dadurch gekennzeichnet sind, dass der mindestens eine Verbindungskanal von einer Abgasleitung des zweiten Abgaskrümmers abzweigt und diese Abgasleitung des zweiten Abgaskrümmers beispielsweise mit einer Abgasleitung des ersten Abgaskrümmers verbindet oder aber mit der Gesamtabgasleitung des ersten Abgaskrümmers.

Da nur geringe Abgasmengen via Verbindungskanal in den ersten Krümmer überführt werden sollen, ist die Versorgung des Verbindungskanals mit Abgas über die Abgasleitung einer einzelnen Auslaßöffnung grundsätzlich ausreichend.

Wird der Verbindungskanal im Wesentlichen nur mit dem Abgas einer einzelnen Auslaßöffnung beaufschlagt, kann eine Pulsation im via Verbindungskanal überführten Abgasstrom auftreten. Dies würde den nachteiligen Effekt mit sich bringen, dass die zuschaltbare Turbine im deaktivierten Zustand mit einer pulsierenden Abgasströmung beaufschlagt wird.

Insofern können Ausführungsformen der aufgeladenen Brennkraftmaschine vorteilhaft sein, bei denen der mindestens eine Verbindungskanal die beiden Gesamtabgasleitungen der Krümmer miteinander verbindet. Bei einer benachbarten Anordnung der beiden Gesamtabgasleitungen zueinander, verkürzt diese Ausführungsform zudem die Länge des Verbindungskanals.

Vorteilhaft sind Ausführungsformen der aufgeladenen Brennkraftmaschine, bei denen die erste Bypaßleitung von der Gesamtabgasleitung des ersten Abgaskrümmers abzweigt.

Da das gesamte Abgas der zum ersten Abgaskrümmer gehörenden Auslaßöffnungen die erste Gesamtabgasleitung passiert, kann bei der in Rede stehenden Ausführungsform theoretisch auch das gesamte Abgas via Bypaßleitung abgeblasen werden.

Das Gesagte gilt in analoger Weise auch für die zweite Bypaßleitung. Vorteilhaft sind daher auch Ausführungsformen der aufgeladenen Brennkraftmaschine, bei denen die zweite Bypaßleitung von der Gesamtabgasleitung des zweiten Abgaskrümmers abzweigt.

Vorteilhaft sind Ausführungsformen der aufgeladenen Brennkraftmaschine, bei denen die Abgasleitungen der mindestens zwei Zylinder innerhalb des Zylinderkopfes zu den zwei Gesamtabgasleitungen zusammenführen.

Wie bereits ausgeführt wurde, ist man im Rahmen der konstruktiven Auslegung der Abgasturboaufladung bemüht, die Turbinen möglichst nahe am Auslaß der Brennkraftmaschine anzuordnen, d. h. die Länge und das Volumen des Leitungssystems stromaufwärts der Turbinen zu minimieren. Die weitgehende Integration der Abgaskrümmer in den Zylinderkopf bzw. das Zusammenführen der Abgasleitungen zu Gesamtabgasleitungen innerhalb des Zylinderkopfes ist dabei eine zielführende Maßnahme.

Ein derartiger Zylinderkopf zeichnet sich durch eine kompakte Bauweise aus, wobei die Gesamtwegstrecke der Abgasleitungen der Abgaskrümmer und das Volumen der Abgasleitungen stromaufwärts der Turbinen reduziert werden. Die Verwendung eines derartigen Zylinderkopfes führt zudem zu einer geringeren Anzahl an Bauteilen und folglich zu einer Verringerung der Kosten, insbesondere der Montage- und Bereitstellungskosten. Die kompakte Bauweise ermöglicht darüber hinaus ein dichtes Packaging der Antriebseinheit im Motorraum.

Erfindungsgemäß müssen nicht die Abgasleitungen sämtlicher Zylinder eines Zylinderkopfes zu zwei Gesamtabgasleitungen zusammengeführt werden, sondern nur die Abgasleitungen von mindestens zwei Zylindern in der beschriebenen Weise gruppiert sein.

Vorteilhaft sind aber insbesondere Ausführungsformen, bei denen die Abgasleitungen sämtlicher Zylinder des mindestens einen Zylinderkopfes zu zwei Gesamtabgasleitungen zusammenführen.

Wird ein Verbindungskanal vorgesehen, sind Ausführungsformen vorteilhaft, bei denen der mindestens eine Verbindungskanal in den Zylinderkopf integriert ist. Dadurch wird die Gefahr einer Leckage von Abgas eliminiert. Zudem wird die Ausbildung einer kompakten Bauweise der Brennkraftmaschine unterstützt. Gegenüber Ausführungsformen mit externem Kanal werden Befestigungsmittel und zusätzliche Dichtelemente entbehrlich.

Vorteilhaft sind auch Ausführungsformen der Brennkraftmaschine, bei denen die erste Bypaßleitung und/oder die zweite Bypaßleitung zumindest teilweise in den Zylinderkopf integriert sind. Auch diese Ausführungsform verringert die Anzahl an Bauteilen und damit die Kosten und mindert die Gefahr der Leckage von Abgas dadurch, dass die Abzweigung der Bypaßleitung im Zylinderkopf vorgesehen ist.

Vorteilhaft sind Ausführungsformen der aufgeladenen Brennkraftmaschine, die zur Betätigung der Auslaßöffnungen mit einem zumindest teilweise variablen Ventiltrieb, vorzugsweise mit einem voll variablen Ventiltrieb ausgestattet sind.

Vorteilhaft sind Ausführungsformen der aufgeladenen Brennkraftmaschine, bei denen der mindestens eine Zylinderkopf mit einem integrierten Kühlmittelmantel ausgestattet ist. Aufgeladene Brennkraftmaschinen sind thermisch höher belastet als Saugmotoren, weshalb höhere Anforderungen an die Kühlung zu stellen sind.

Grundsätzlich besteht die Möglichkeit, die Kühlung in Gestalt einer Luftkühlung oder einer Flüssigkeitskühlung auszuführen. Aufgrund der wesentlich höheren Wärmekapazität von Flüssigkeiten gegenüber Luft können mit der Flüssigkeitskühlung wesentlich größere Wärmemengen abgeführt werden als dies mit einer Luftkühlung möglich ist.

Die Flüssigkeitskühlung erfordert die Ausstattung der Brennkraftmaschine, d. h. des Zylinderkopfes bzw. des Zylinderblocks, mit einem integrierten Kühlmittelmantel, d. h. die Anordnung von das Kühlmittel durch den Zylinderkopf bzw. Zylinderblock führenden Kühlmittelkanälen. Die Wärme wird bereits im Inneren des Bauteils an das Kühlmittel, in der Regel mit Additiven versetztes Wasser, abgegeben. Das Kühlmittel wird dabei mittels einer im Kühlkreislauf angeordneten Pumpe gefördert, so dass es im Kühlmittelmantel zirkuliert. Die an das Kühlmittel abgegebene Wärme wird auf diese Weise aus dem Inneren des Kopfes bzw. Blocks abgeführt und dem Kühlmittel in einem Wärmetauscher wieder entzogen.

Die zweite der Erfindung zugrunde liegende Teilaufgabe, nämlich ein Verfahren zum Betreiben einer Brennkraftmaschine gemäß einer zuvor beschriebenen Art aufzuzeigen, wird gelöst durch ein Verfahren, bei dem die bei einer geringen Abgasmenge deaktivierten zuschaltbaren Auslaßöffnungen aktiviert werden, sobald die Abgasmenge eine erste vorgebbare Abgasmenge übersteigt.

Das im Zusammenhang mit der erfindungsgemäßen Brennkraftmaschine Gesagte gilt ebenfalls für das erfindungsgemäße Verfahren. Das Aktivieren der Auslaßöffnungen ist gleichbedeutend mit dem Zuschalten der ersten Turbine. Ein vorheriges Beschleunigen der zuschaltbaren Turbine via Bypaßleitung der als Waste-Gate-Turbine ausgeführten zweiten Turbine bleibt davon unberührt, d. h. ist unabhängig davon möglich.

Bei einer nicht aufgeladenen Brennkraftmaschine korrespondiert die Abgasmenge näherungsweise mit der Drehzahl und/oder der Last der Brennkraftmaschine und zwar abhängig von der im Einzelfall verwendeten Laststeuerung. Bei einem traditionellen Ottomotor mit Quantitätsregelung steigt die Abgasmenge auch bei konstanter Drehzahl mit zunehmender Last an, wohingegen die Abgasmenge bei traditionellen Dieselmotoren mit Qualitätsregelung lediglich drehzahlabhängig ist, weil bei Laständerung und konstanter Drehzahl die Gemischzusammensetzung, nicht jedoch die Gemischmenge variiert.

Liegt der erfindungsgemäßen Brennkraftmaschine eine Quantitätsregelung zugrunde, bei der die Last über die Menge an Frischgemisch gesteuert wird, kann die Abgasmenge die relevante, d. h. vorgebbare, Abgasmenge auch bei konstanter Drehzahl übersteigen, wenn die Last der Brennkraftmaschine eine vorgebbare Last übersteigt, da die Abgasmenge mit der Last korreliert, wobei die Abgasmenge mit zunehmender Last steigt und mit abnehmender Last sinkt.

Liegt der Brennkraftmaschine hingegen eine Qualitätsregelung zugrunde, bei der die Last über die Zusammensetzung des Frischgemischs gesteuert wird und sich die Abgasmenge nahezu ausschließlich mit der Drehzahl ändert, d. h. proportional zur Drehzahl ist, übersteigt die Abgasmenge unabhängig von der Last die vorgebbare Abgasmenge, wenn die Drehzahl der Brennkraftmaschine eine vorgebbare Drehzahl übersteigt.

Die erfindungsgemäße Brennkraftmaschine ist eine aufgeladene Brennkraftmaschine, so dass zusätzlich der Ladedruck auf der Ansaugseite zu berücksichtigen ist, der sich mit der Last und/oder der Drehzahl ändern kann und Einfluß auf die Abgasmenge hat. Die vorstehend dargelegten Zusammenhänge betreffend die Abgasmenge und die Last bzw. Drehzahl gelten folglich in dieser allgemeinen Form nur bedingt. Daher stellt das erfindungsgemäße Verfahren ganz allgemein auf die Abgasmenge ab und nicht auf die Last bzw. Drehzahl.

Wenn die Abgasmenge eine vorgebbare Abgasmenge wieder unterschreitet, werden die zuschaltbaren Auslaßöffnungen erneut deaktiviert und mit diesen die zuschaltbare erste Turbine.

Vorteilhaft sind Verfahrensvarianten, bei denen die zuschaltbaren Auslaßöffnungen aktiviert werden, sobald die Abgasmenge eine erste vorgebbare Abgasmenge übersteigt und für eine vorgebbare Zeitspanne *Δt₁* größer ist als diese vorgegebene Abgasmenge.

Die Einführung einer zusätzlichen Bedingung für das Zuschalten der ersten Turbine soll ein zu häufiges Umschalten verhindern, insbesondere ein Aktivieren der zuschaltbaren Auslaßöffnungen, wenn die Abgasmenge nur kurzzeitig die erste vorgegebene Abgasmenge überschreitet und dann wieder fällt bzw. um den vorgegebenen Wert für die Abgasmenge schwankt, ohne dass das Überschreiten ein Zuschalten der ersten Turbine rechtfertigen bzw. erfordern würde.

Aus den zuvor genannten Gründen sind auch Verfahrensvarianten vorteilhaft, bei denen die zuschaltbaren Auslaßöffnungen deaktiviert werden, sobald die Abgasmenge eine vorgebbare Abgasmenge unterschreitet und für eine vorgebbare Zeitspanne *Δt₂* kleiner ist als diese vorgegebene Abgasmenge.

Die Tatsache, dass erfindungsgemäß beide Turbinen als Waste-Gate-Turbinen ausgebildet sind, und die erfindungsgemäße Anordnung der beiden dazugehörigen Bypaßleitungen ermöglicht Verfahrensvarianten, bei denen die erste zuschaltbare Turbine kurz vor dem Aktivieren durch Öffnen des am Knotenpunkt angeordneten Absperrelementes beschleunigt wird, wobei Abgas vom zweiten Krümmer via zweiter und erster Bypaßleitung in den ersten Krümmer strömt, d. h. überführt wird.

Die gemeinsame Bypaßleitung kann stromabwärts der Turbinen in eine der beiden oder in beide Gesamtabgasleitungen münden.

Vorteilhaft sind Ausführungsformen des Verfahrens, bei denen das Absperrelement geöffnet wird, sobald die Abgasmenge eine zweite vorgebbare Abgasmenge übersteigt.

Vorteilhaft sind dabei wiederum Verfahrensvarianten, bei denen das Absperrelement geöffnet wird, sobald die Abgasmenge eine zweite vorgebbare Abgasmenge übersteigt und für eine vorgebbare Zeitspanne *Δt₃* größer ist als diese vorgegebene Abgasmenge.

Vorteilhaft sind auch Verfahrensvarianten, bei denen das Absperrelement geschlossen wird, sobald die Abgasmenge eine vorgebbare Abgasmenge unterschreitet und für eine vorgebbare Zeitspanne *Δt₄* kleiner ist als diese vorgegebene Abgasmenge.

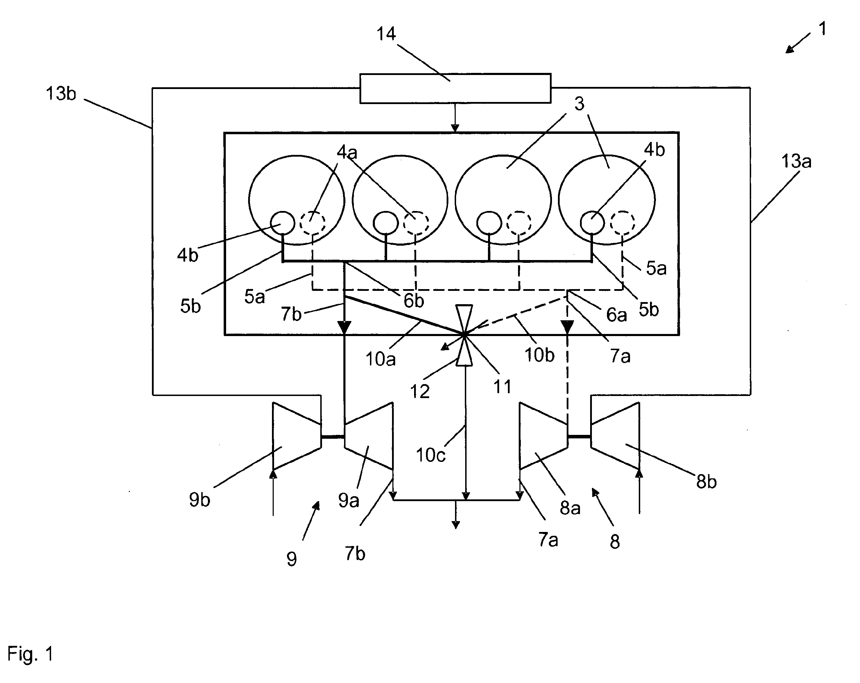

Im Folgenden wird die Erfindung anhand eines Ausführungsbeispiels gemäß Figur 1 näher beschrieben. Hierbei zeigt:
- Fig. 1: schematisch eine erste Ausführungsform der Brennkraftmaschine.

Figur 1 zeigt schematisch eine erste Ausführungsform der Brennkraftmaschine 1, die mit zwei Abgasturboladern 8, 9 ausgestattet ist. Jeder Abgasturbolader 8, 9 umfaßt eine Turbine 8a, 9a und einen Verdichter 8b, 9b, die auf derselben Welle angeordnet sind. Das heiße Abgas entspannt sich in den Turbinen 8a, 9a unter Energieabgabe und die Verdichter 8b, 9b komprimieren die Ladeluft, die via Ansaugleitungen 13a, 13b und Plenum 14 den Zylindern 3 zugeführt wird, wodurch die Aufladung der Brennkraftmaschine 1 erreicht wird.

Bei der Brennkraftmaschine 1 handelt es sich um einen Vier-Zylinder-Reihenmotor, bei dem die Zylinder 3 entlang der Längsachse des Zylinderkopfes 2, d. h. in Reihe, angeordnet sind. Jeder Zylinder 3 weist zwei Auslaßöffnungen 4a, 4b auf, wobei sich an jede Auslaßöffnung 4a, 4b eine Abgasleitung 5a, 5b zum Abführen der Abgase aus dem Zylinder 3 anschließt.

Jeweils eine Auslaßöffnung 4a jedes Zylinders 3 ist als zuschaltbare Auslaßöffnung 4a ausgebildet, die im Rahmen des Ladungswechsels nur dann geöffnet wird, wenn die Abgasmenge eine erste vorgegebene Abgasmenge übersteigt. Dadurch wird die stromabwärts angeordnete erste Turbine 8a aktiviert, d. h. mit Abgas beaufschlagt. Die Abgasleitungen 5a der zuschaltbaren Auslaßöffnungen 4a sämtlicher Zylinder 3 führen unter Ausbildung eines ersten Abgaskrümmers 6a zu einer ersten Gesamtabgasleitung 7a zusammen, welche mit der Turbine 8a des ersten Abgasturboladers 8 verbunden ist (gestrichelt gezeichnete Linien).

Die Abgasleitungen 5b der anderen Auslaßöffnungen 4b sämtlicher Zylinder 3 führen unter Ausbildung eines zweiten Abgaskrümmers 6b zu einer zweiten Gesamtabgasleitung 7b zusammen, welche mit der Turbine 9a des zweiten Abgasturboladers 9 verbunden ist (durchgezogene Linien).

Vorliegend führen die Abgasleitungen 5a, 5b innerhalb des Zylinderkopfes 2 zu Gesamtabgasleitungen 7a, 7b zusammen.

Wie aus Figur 1 ersichtlich, sind beide Turbinen 8a, 9a als Waste-Gate-Turbinen 8a, 9a ausgebildet, bei denen via Bypaßleitungen 10a, 10b, 10c Abgas abgeblasen werden kann.

Vorliegend ist die erste Turbine 8a mit einer ersten Bypaßleitung 10a ausgestattet, die stromaufwärts der ersten Turbine 8a aus der Gesamtabgasleitung 7a des ersten Abgaskrümmer 6a abzweigt, und die zweite Turbine 9a mit einer zweiten Bypaßleitung 10b, die stromaufwärts der zweiten Turbine 9a aus der Gesamtabgasleitung 7b des zweiten Abgaskrümmer 6b abzweigt.

Die erste und die zweite Bypaßleitung 10a, 10b sind in den Zylinderkopf 2 integriert, wodurch die Gefahr einer Leckage von Abgas verringert wird, und führen unter Ausbildung eines Knotenpunktes 11 zu einer gemeinsamen Bypaß leitung 10c zusammen.

An dem Knotenpunkt 11 ist ein Absperrelement 12 vorgesehen, welches zwischen einer Offenstellung und einer Schließstellung verstellbar ist. Das Absperrelement 12 trennt die beiden Bypaßleitungen 10a, 10b in der Schließstellung von der gemeinsamen Bypaßleitung 10c und verbindet diese mit der gemeinsamen Bypaßleitung 10c in der Offenstellung.

### Bezugszeichen

- 1: aufgeladene Brennkraftmaschine
- 2: Zylinderkopf
- 3: Zylinder
- 4a: zuschaltbare Auslaßöffnung
- 4b: Auslaßöffnung
- 5a: Abgasleitung
- 5b: Abgasleitung
- 6a: erster Abgaskrümmer
- 6b: zweiter Abgaskrümmer
- 7a: erste Gesamtabgasleitung
- 7b: zweite Gesamtabgasleitung
- 8: erster Abgasturbolader
- 8a: erste Turbine, zuschaltbare Turbine
- 8b: erster Verdichter
- 9: zweiter Abgasturbolader
- 9a: zweite Turbine
- 9b: zweiter Verdichter
- 10a: erste Bypaßleitung
- 10b: zweite Bypaßleitung
- 10c: gemeinsame Bypaßleitung
- 11: Knotenpunkt
- 12: Absperrelement
- 13a: erste Ansaugleitung
- 13b: zweite Ansaugleitung
- 14: Plenum

- A_{Quer,K}: kleinster Querschnitt eines Kanals
- A_{Quer,Ex}: kleinster Querschnitt einer Abgasleitung
- n_{T}: Drehzahl der Welle des ersten Abgasturboladers

## Patentansprüche

1. Aufgeladene Brennkraftmaschine (1) mit mindestens zwei Abgasturboladern (8, 9) und mindestens einem Zylinderkopf (2) mit mindestens zwei Zylindern (3), wobei jeder Zylinder (3) mindestens zwei Auslaßöffnungen (4a, 4b) zum Abführen der Abgase aufweist, von denen mindestens eine als zuschaltbare Auslaßöffnung (4a) ausgebildet ist, und sich an jede Auslaßöffnung (4a, 4b) eine Abgasleitung (5a, 5b) anschließt, bei der
- die Abgasleitungen (5a) der zuschaltbaren Auslaßöffnungen (4a) von mindestens zwei Zylindern (3) unter Ausbildung eines ersten Abgaskrümmers (6a) zu einer ersten Gesamtabgasleitung (7a) zusammenführen, welche mit der Turbine (8a) eines ersten Abgasturboladers (8) verbunden ist,
- die Abgasleitungen (5b) der anderen Auslaßöffnungen (4b) der mindestens zwei Zylinder (3) unter Ausbildung eines zweiten Abgaskrümmers (6b) zu einer zweiten Gesamtabgasleitung (7b) zusammenführen, welche mit der Turbine (9a) eines zweiten Abgasturboladers (9) verbunden ist,
- die erste Turbine (8a) mit einer ersten Bypaßleitung (10a) ausgestattet ist, die stromaufwärts der ersten Turbine (8a) aus dem ersten Abgaskrümmer (6a) abzweigt,
- die zweite Turbine (9a) mit einer zweiten Bypaßleitung (10b) ausgestattet ist, die stromaufwärts der zweiten Turbine (9a) aus dem zweiten Abgaskrümmer (6b) abzweigt, und
- die erste Bypaßleitung (10a) und die zweite Bypaßleitung (10b) unter Ausbildung eines Knotenpunktes (11) zu einer gemeinsamen Bypaßleitung (10c) zusammenführen,
**dadurch gekennzeichnet, dass**
am Knotenpunkt (11) ein Absperrelement (12) vorgesehen ist, welches zwischen einer Offenstellung und einer Schließstellung verstellbar ist, wobei
- das Absperrelement (12) die beiden Bypaßleitungen (10a, 10b) in der Schließstellung von der gemeinsamen Bypaßleitung (10c) trennt und in der Offenstellung mit der gemeinsamen Bypaßleitung (10c) verbindet,
- in der Schließstellung des Absperrelementes (12) mindestens ein Überströmkanal verbleibt, der die beiden Bypaßleitungen (10a, 10b) miteinander verbindet,
- das Absperrelement (12) den mindestens einen Überströmkanal beim Überführen in die Schließstellung mit ausbildet, und
- der mindestens eine Überströmkanal eine Drosselstelle darstellt, die eine Druckabsenkung in der durch den Kanal hindurchtretenden Abgasströmung bewirkt.

2. Aufgeladene Brennkraftmaschine (1) nach Anspruch 1, **dadurch gekennzeichnet, dass** der erste Abgaskrümmer (6a) und der zweite Abgaskrümmer (6b) stromaufwärts der beiden Turbinen (8a, 9a) via mindestens einen nicht verschließbaren Verbindungskanal dauerhaft miteinander verbunden sind.

3. Aufgeladene Brennkraftmaschine (1) nach Anspruch 2, **dadurch gekennzeichnet, dass** der mindestens eine Verbindungskanal eine Drosselstelle darstellt, die eine Druckabsenkung in der durch den Kanal hindurchtretenden Abgasströmung bewirkt.

4. Aufgeladene Brennkraftmaschine (1) nach einem der vorherigen Ansprüche, **dadurch gekennzeichnet, dass** der kleinste Querschnitt A_{Quer,K} des mindestens einen Kanals kleiner ist als der kleinste Querschnitt A_{Quer,Ex} einer Abgasleitung (5a,5b).

5. Aufgeladene Brennkraftmaschine (1) nach Anspruch 4, **dadurch gekennzeichnet, dass** gilt: A_{Quer,K} ≤ 0.2 A_{Quer,Ex.}

6. Aufgeladene Brennkraftmaschine (1) nach Anspruch 4, **dadurch gekennzeichnet, dass** gilt: A_{Quer,K} ≤ 0.1 A_{Quer,Ex}.

7. Aufgeladene Brennkraftmaschine (1) nach einem der vorherigen Ansprüche, **dadurch gekennzeichnet, dass** die erste Bypaßleitung (10a) von der Gesamtabgasleitung (7a) des ersten Abgaskrümmers (6a) abzweigt.

8. Aufgeladene Brennkraftmaschine (1) nach einem der vorherigen Ansprüche, **dadurch gekennzeichnet, dass** die zweite Bypaßleitung (10b) von der Gesamtabgasleitung (7b) des zweiten Abgaskrümmers (6b) abzweigt.

9. Aufgeladene Brennkraftmaschine (1) nach einem der vorherigen Ansprüche, **dadurch gekennzeichnet, dass** die Abgasleitungen (5a, 5b) der mindestens zwei Zylinder (3) innerhalb des Zylinderkopfes (2) zu den zwei Gesamtabgasleitungen (7a, 7b) zusammenführen.

10. Aufgeladene Brennkraftmaschine (1) nach einem der Ansprüche 2 bis 9, **dadurch gekennzeichnet, dass** der mindestens eine Verbindungskanal in den Zylinderkopf (2) integriert ist.

11. Aufgeladene Brennkraftmaschine (1) nach einem der vorherigen Ansprüche, **dadurch gekennzeichnet, dass** die erste Bypaßleitung (10a) und/oder die zweite Bypaßleitung (10b) zumindest teilweise in den Zylinderkopf (2) integriert sind.

12. Verfahren zum Betreiben einer aufgeladenen Brennkraftmaschine (1) nach einem der vorherigen Ansprüche, **dadurch gekennzeichnet, dass** die bei einer geringen Abgasmenge deaktivierten zuschaltbaren Auslaßöffnungen (4a) aktiviert werden, sobald die Abgasmenge eine erste vorgebbare Abgasmenge übersteigt.

13. Verfahren nach Anspruch 12, **dadurch gekennzeichnet, dass** das Absperrelement (12) geöffnet wird, sobald die Abgasmenge eine zweite vorgebbare Abgasmenge übersteigt.

## Claims

1. Supercharged internal combustion engine (1) having at least two exhaust-gas turbochargers (8, 9) and having at least one cylinder head (2) with at least two cylinders (3), wherein each cylinder (3) has at least two outlet openings (4a, 4b) for discharging the exhaust gases, at least one of which outlet openings is designed as an activatable outlet opening (4a), and each outlet opening (4a, 4b) is adjoined by an exhaust line (5a, 5b), in which
- the exhaust lines (5a) of the activatable outlet openings (4a) of at least two cylinders (3) merge, with the formation of a first exhaust manifold (6a), to form a first overall exhaust line (7a) which is connected to the turbine (8a) of a first exhaust-gas turbocharger (8),
- the exhaust lines (5b) of the other outlet openings (4b) of the at least two cylinders (3) merge, with the formation of a second exhaust manifold (6b), to form a second overall exhaust line (7b) which is connected to the turbine (9a) of a second exhaust-gas turbocharger (9),
- the first turbine (8a) is equipped with a first bypass line (10a) which branches off from the first exhaust manifold (6a) upstream of the first turbine (8a),
- the second turbine (9a) is equipped with a second bypass line (10b) which branches off from the second exhaust manifold (6b) upstream of the second turbine (9a), and
- the first bypass line (10a) and the second bypass line (10b) merge, with the formation of a junction point (11), to form a common bypass line (10c),
**characterized in that**,
- at the junction point (11), a shut-off element (12) is provided which can be adjusted between an open position and a closed position, wherein
- the shut-off element (12) separates the two bypass lines (10a, 10b) from the common bypass line (10c) when in the closed position and connects the two bypass lines (10a, 10b) to the common bypass line (10c) when in the open position,
- in the closed position of the shut-off element (12), there remains at least one overflow duct which connects the two bypass lines (10a, 10b) to one another,
- the shut-off element (12) jointly forms the at least one overflow duct as it is moved into the closed position, and
- the at least one overflow duct forms a throttle point which causes a pressure reduction in the exhaust-gas flow passing through the duct.

2. Supercharged internal combustion engine (1) according to Claim 1, **characterized in that** the first exhaust manifold (6a) and the second exhaust manifold (6b) are permanently connected to one another upstream of the two turbines (8a, 9a) via at least one connecting duct which cannot be closed off.

3. Supercharged internal combustion engine (1) according to Claim 2, **characterized in that** the at least one connecting duct forms a throttle point which causes a pressure reduction in the exhaust-gas flow passing through the duct.

4. Supercharged internal combustion engine (1) according to one of the preceding claims, **characterized in that** the smallest cross section A_{Cross,D} of the at least one duct is smaller than the smallest cross section A_{Cross,Ex} of an exhaust line (5a, 5b).

5. Supercharged internal combustion engine (1) according to Claim 4, **characterized in that** the following relationship applies: A_{Cross,D} ≤ 0.2 A_{Cross,Ex}.

6. Supercharged internal combustion engine (1) according to Claim 4, **characterized in that** the following relationship applies: A_{Cross,D} ≤ 0.1 A_{Cross,Ex}.

7. Supercharged internal combustion engine (1) according to one of the preceding claims, **characterized in that** the first bypass line (10a) branches off from the overall exhaust line (7a) of the first exhaust manifold (6a).

8. Supercharged internal combustion engine (1) according to one of the preceding claims, **characterized in that** the second bypass line (10b) branches off from the overall exhaust line (7b) of the second exhaust manifold (6b).

9. Supercharged internal combustion engine (1) according to one of the preceding claims, **characterized in that** the exhaust lines (5a, 5b) of the at least two cylinders (3) merge to form the two overall exhaust lines (7a, 7b) within the cylinder head (2).

10. Supercharged internal combustion engine (1) according to one of Claims 2 to 9, **characterized in that** the at least one connecting duct is integrated into the cylinder head (2).

11. Supercharged internal combustion engine (1) according to one of the preceding claims, **characterized in that** the first bypass line (10a) and/or the second bypass line (10b) are at least partially integrated into the cylinder head (2).

12. Method for operating a supercharged internal combustion engine (1) according to one of the preceding claims, **characterized in that** the activatable outlet openings (4a), which are deactivated in the case of a low exhaust-gas quantity, are activated when the exhaust-gas quantity exceeds a first predefinable exhaust-gas quantity.

13. Method according to Claim 12, **characterized in that** the shut-off element (12) is opened when the exhaust-gas quantity exceeds a second predefinable exhaust-gas quantity.

## Revendications

1. Moteur à combustion interne à suralimentation (1) comprenant au moins deux turbocompresseurs à gaz d'échappement (8, 9) et au moins une culasse (2) avec au moins deux cylindres (3), chaque cylindre (3) présentant au moins deux ouvertures de sortie (4a, 4b) pour l'évacuation des gaz d'échappement, dont au moins une est réalisée sous forme d'ouverture de sortie commutable (4a), et une conduite de gaz d'échappement (5a, 5b) se raccordant à chaque ouverture de sortie (4a, 4b), dans lequel
- les conduites de gaz d'échappement (5a) des ouvertures de sortie commutables (4a) d'au moins deux cylindres (3) se réunissent en formant un premier collecteur de gaz d'échappement (6a) pour donner une première conduite de gaz d'échappement globale (7a), qui est connectée à la turbine (8a) d'un premier turbocompresseur à gaz d'échappement (8),
- les conduites de gaz d'échappement (5b) des autres ouvertures de sortie (4b) des au moins deux cylindres (3) se réunissent en formant un deuxième collecteur de gaz d'échappement (6b) pour donner une deuxième conduite de gaz d'échappement globale (7b), qui est connectée à la turbine (9a) d'un deuxième turbocompresseur à gaz d'échappement (9),
- la première turbine (8a) est pourvue d'une première conduite de dérivation (10a) qui part en amont de la première turbine (8a) depuis le premier collecteur de gaz d'échappement (6a),
- la deuxième turbine (9a) est pourvue d'une deuxième conduite de dérivation (10b) qui part en amont de la deuxième turbine (9a) depuis le deuxième collecteur de gaz d'échappement (6b), et
- la première conduite de dérivation (10a) et la deuxième conduite de dérivation (10b) se réunissent en formant un noeud (11) pour donner une conduite de dérivation commune (10c),
**caractérisé en ce**
**qu'**un élément de blocage (12) est prévu au niveau du noeud (11), lequel peut être réglé entre une position d'ouverture et une position de fermeture,
- l'élément de blocage (12), dans la position de fermeture, séparant les deux conduites de dérivation (10a, 10b) de la conduite de dérivation commune (10c) et, dans la position d'ouverture, les reliant à la conduite de dérivation commune (10c),
- dans la position de fermeture de l'élément de blocage (12), au moins un canal de débordement subsistant, lequel relie l'une à l'autre les deux conduites de dérivation (10a, 10b),
- l'élément de blocage (12) constitue également l'au moins un canal de débordement lors du transfert dans la position de fermeture, et
- l'au moins un canal de débordement constitue un point d'étranglement qui provoque une réduction de pression dans l'écoulement de gaz d'échappement traversant le canal.

2. Moteur à combustion interne à suralimentation (1) selon la revendication 1, **caractérisé en ce que** le premier collecteur de gaz d'échappement (6a) et le deuxième collecteur de gaz d'échappement (6b) sont connectés l'un à l'autre de manière durable en amont des deux turbines (8a, 9a) par le biais d'au moins un canal de connexion non refermable.

3. Moteur à combustion interne à suralimentation (1) selon la revendication 2, **caractérisé en ce que** l'au moins un canal de connexion constitue un point d'étranglement, qui provoque une réduction de pression dans l'écoulement de gaz d'échappement traversant le canal.

4. Moteur à combustion interne à suralimentation (1) selon l'une quelconque des revendications précédentes, **caractérisé en ce que** la plus petite section transversale A_{Quer,K} de l'au moins un canal est inférieure à la plus petite section transversale A_{Quer,Ex} d'une conduite de gaz d'échappement (5a, 5b).

5. Moteur à combustion interne à suralimentation (1) selon la revendication 4, **caractérisé en ce que** l'on a A_{Quer,K} ≤ 0,2 A_{Quer,Ex}.

6. Moteur à combustion interne à suralimentation (1) selon la revendication 4, **caractérisé en ce que** l'on a A_{Quer,K} ≤ 0,1 A_{Quer,Ex}.

7. Moteur à combustion interne à suralimentation (1) selon l'une quelconque des revendications précédentes, **caractérisé en ce que** la première conduite de dérivation (10a) part de la conduite de gaz d'échappement globale (7a) du premier collecteur de gaz d'échappement (6a).

8. Moteur à combustion interne à suralimentation (1) selon l'une quelconque des revendications précédentes, **caractérisé en ce que** la deuxième conduite de dérivation (10b) part de la conduite de gaz d'échappement globale (7b) du deuxième collecteur de gaz d'échappement (6b).

9. Moteur à combustion interne à suralimentation (1) selon l'une quelconque des revendications précédentes, **caractérisé en ce que** les conduites de gaz d'échappement (5a, 5b) des au moins deux cylindres (3) se réunissent à l'intérieur de la culasse (2) pour donner les deux conduites de gaz d'échappement globales (7a, 7b).

10. Moteur à combustion interne à suralimentation (1) selon l'une quelconque des revendications 2 à 9, **caractérisé en ce que** l'au moins un canal de connexion est intégré dans la culasse (2).

11. Moteur à combustion interne à suralimentation (1) selon l'une quelconque des revendications précédentes, **caractérisé en ce que** la première conduite de dérivation (10a) et/ou la deuxième conduite de dérivation (10b) sont au moins en partie intégrées dans la culasse (2).

12. Procédé pour faire fonctionner un moteur à combustion interne à suralimentation (1) selon l'une quelconque des revendications précédentes, **caractérisé en ce que** les ouvertures de sortie (4a) commutables, désactivées dans le cas d'une faible quantité de gaz d'échappement, sont activées dès que la quantité de gaz d'échappement dépasse une quantité de gaz d'échappement prédéfinissable.

13. Procédé selon la revendication 12, **caractérisé en ce que** l'élément de blocage (12) est ouvert dès que la quantité de gaz d'échappement dépasse une deuxième quantité de gaz d'échappement prédéfinissable.
